# EUROPEAN PATENT SPECIFICATION

(11) **EP 3 679 107 B1**
(45) Date of publication and mention of the grant of the patent: **14.07.2021**
(21) Application number: 18762538.9
(22) Date of filing: 07.09.2018
(51) Int. Cl.: C09J 175/04, C08G 18/71, C08G 18/76, C08G 18/80, C08G 18/12, C08G 18/30, C08G 18/40, C08K 5/548, C07C 269/02, C08L 75/04

(54) **MOISTURE CURING POLYURETHANE HOT-MELT ADHESIVE HAVING GOOD ADHESION TO POLAR SUBSTRATES**
FEUCHTIGKEITSHÄRTENDER POLYURETHANSCHMELZKLEBSTOFF MIT GUTER HAFTUNG AUF POLAREN SUBSTRATEN
ADHÉSIF THERMOFUSIBLE DE POLYURÉTHANE DURCISSANT À L'HUMIDITÉ PRÉSENTANT UNE BONNE ADHÉRENCE À DES SUBSTRATS POLAIRES

(30) Priority: 08.09.2017 EP 17190113
(43) Date of publication of application: 15.07.2020
(73) Proprietor: Sika Technology AG, 6340 Baar (CH)
(72) Inventor: JANKE, Doreen, 25486 Alveslohe (DE); PASCHKOWSKI, Kai, 21635 Jork (DE); BIEN, Kathrin, 21337 Lüneburg (DE)
(74) Representative: Sika Patent Attorneys
(86) International application number: PCT/EP2018/074093
(87) International publication number: WO 2019/048594

(56) References cited:
- WO-A1-2008/076146
- US-A1- 2009 159 204
- US-A1- 2017 002 239

## Description

### Technical field

The invention relates to moisture curing polyurethane hot-melt adhesives having good bonding on polar substrates, in particular on metal substrates and to use of such adhesive compositions as an assembly adhesive, a laminating adhesive, or as an adhesive for the building of sandwich elements, in particular in automotive industry.

### Background of the invention

Hot-melt adhesives are solvent free adhesives, which are solid at room temperature and which are applied to the substrate to be bonded in form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the cured polymer matrix the reactive hot-melts do not soften upon heating and these adhesives are, therefore, suitable for use also at elevated temperatures. The chemical curing of the polymers can be initiated, for example, by heating or exposing the composition to water. Moisture curing hot-melt adhesives typically contain polymers functionalized with isocyanate or silane groups, which enable the crosslinking of the polymer chains upon contact with water, in particular with atmospheric moisture.

Reactive polyurethane hot-melt (PU-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. These adhesives develop a high initial adhesive strength immediately after application by cooling and acquire their ultimate properties, especially heat stability and resistance to environmental influences, by the gradual curing process.

State-of-the-Art PU-RHM adhesives can also contain non-reactive thermoplastic polymers, such as homo or copolymers of unsaturated monomers. These components are added to the adhesive composition in order to adjust the mechanical properties of the adhesive according to the application requirements. The non-reactive thermoplastic polymers may be added to the adhesive composition, for example, to adjust the open time or to improve the heat stability of the cured adhesive. Furthermore, the thermoplastic polymers are typically cheaper than for example the polyols and polyisocyanates, and therefore, the production costs of the adhesive composition can be reduced by increasing the portion of non-reactive thermoplastic polymers. The State-of-the-Art PU-RHM adhesives containing significant amounts of non-reactive thermoplastics are, however, known to have the disadvantage of poor or at most moderate bonding on polar substrates, in particular on substrates composed of glass, metal, or ABS (acrylonitrile butadiene styrene). In addition, such adhesives are known suffer from increased curing time and decreased green strength. Consequently, The State-of-the-Art PU-RHM adhesives containing significant amounts of non-reactive thermoplastic polymers have traditionally found only a limited use in automotive industry, especially as an assembly or as a laminating adhesive, or as an adhesive for the building of sandwich elements.

There is thus a need for an improved PU-RHM adhesive, which can be produced with lower costs than State-of-the Art adhesives and which provides good adhesion on polar substrates, short curing time and high green strength.

### Summary of the invention

The object of the present invention is to provide a moisture curing adhesive composition, which overcomes or at least mitigates the disadvantages of the prior art PU-RHM adhesives as discussed above.

In particular, it is an object of the present invention to provide a moisture curing adhesive composition, which has good bonding on various polar substrates, in particular on glass, metal, and ABS substrates.

Another objective of the present invention is to provide a moisture curing adhesive composition, which can be produced with lower production costs than State-of-the-Art PU-RHM adhesives and which provides short curing time and high green bond strength.

The subject of the present invention is an adhesive composition as defined in claim 1.

It was surprisingly found out that an adhesive composition comprising at least one isocyanate-functional polyurethane polymer and an adhesion promoter obtained from reacting at least one monoisocyanate and at least one isocyanate reactive silane provides good bonding on various polar substrates, in particular on glass, metal, and ABS substrates.

One of the advantages of the adhesive composition of the present invention is that the bonding on polar substrates can be improved without having a negative impact on the other important adhesive properties, such as open time, heat stability, tensile strength, and elongation at break of the cured adhesive composition.

Another advantage of the adhesive composition of the present invention is that it provides reduced through curing time and improved green strength compared to State-of-the-Art PU-RHM adhesives containing significant amounts of non-reactive thermoplastic polymers.

Other aspects of the present invention are presented in other independent claims. Preferred aspects of the invention are presented in the dependent claims.

### Detailed description of the invention

The subject of the present invention is an adhesive composition comprising:
a) A first reaction product **RP1** obtainable by reacting a first reaction mixture comprising at least one polyol **PO** and at least one polyisocyanate **P,** wherein the ratio of isocyanate groups to hydroxyl groups in the first reaction mixture has a value of at least 1.1, preferably in the range of 1.2 - 2.5, and
b) A second reaction product **RP2** obtainable by reacting a second reaction mixture comprising at least one monoisocyanate **MI** and at least one isocyanate reactive silane **SI** containing only one isocyanate reactive group selected from the group consisting of a hydroxyl group, mercapto group and amino group.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "monomer" designates a molecule having at least one polymerizable group. A monomeric di- or polyisocyanate contains in particular no urethane groups. Oligomers or polymer products of diisocyanate monomers such as adducts of monomeric diisocyanates are not monomeric diisocyanates. The monomeric di- or polyisocyanate has in particular an average molecular weight of not more than 1,000 g/mol, preferably not more than 500 g/mol, and more preferably not more than 400 g/mol.

The term "prepolymer" designates a polymer, which contains at least one, usually two or more, reactive group(s), for example isocyanate groups. By way of the reactive groups, the prepolymer may be chain-extended, crosslinked or cured.

The term "polyurethane polymer" designates polymers prepared by the so called diisocyanate polyaddition process. These also include those polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

The term "polyurethane prepolymer" designates polyurethane polymers comprising one or more unreacted isocyanate groups. The polyurethane prepolymers can be obtained by reacting excess of polyisocyanates with polyols and they are polyisocyanates themselves. The terms "isocyanate-functional polyurethane polymer" and "polyurethane prepolymer" are used interchangeably.

The term "silane" refers to a compounds, which have at least one, typically two or three, alkoxy groups or acyloxy groups directly bonded to the silicon atom by Si-O bonds and on the other hand, at least one organic radical bound directly to the silicon atom by an Si-C bond. For example, siloxane or silicones are not to be considered as silanes according to the present disclosure.

The term "silane group" refers to silicon-containing group bound to the organic radical of a silane via the Si-C bond. The silanes and/or their silane groups have the property of undergoing hydrolysis upon contact with moisture. The terms "silane group" and "alkoxysilane group" are used interchangeably. The term "silane-functional" denotes compounds containing silane groups. "Silane-functional polymers" are thus polymers containing at least one silane group.

The term "(meth)acrylic" designates methacrylic or acrylic. A (meth)acryloyl group is also known as (meth)acryl group. A (meth)acrylic compound can have one or more (meth)acryl groups (mono,- di-, tri- etc. functional (meth)acrylic compounds) and it may be a monomer, prepolymer, an oligomer, or a polymer.

The term "crystalline polyol" designates both fully crystalline and partially crystalline polyols.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by gel permeation chromatography.

The term "softening point" or "softening temperature" designates a temperature at which compound softens in a rubber-like state, or a temperature at which the crystalline portion within the compound melts. The softening point can be measured by a Ring and Ball method according to DIN EN 1238.

The term "open time" designates the length of a time period during which an adhesive applied to a surface of a substrate is still able to form an adhesive bond after being contacted with another substrate.

The "amount of at least one component X" in a composition, for example "the amount of the at least one polyol **PO"** refers in the present document to the sum of the individual amounts of all polyols **PO** contained in the composition. For example, in case the composition comprises 20 wt.-% of at least one polyol **PO,** the sum of the amounts of all polyols **PO** contained in the composition equals 20 wt.-%.

The term "room temperature" refers to a temperature of ca. 23°C.

A dashed line in the chemical formulas of this document represents the bonding between a moiety and the corresponding rest of the molecule.

The adhesive composition of the present invention comprises a first reaction product **RP1,** which is obtainable by reacting a first reaction mixture comprising at least one polyol **PO** and at least one polyisocyanate **P,** which is used in a stoichiometric excess in relation to the at least one polyol **PO.** Preferably, the polyisocyanate **P** is used in such an amount that the ratio of the isocyanate groups to hydroxyl groups in the first reaction mixture has a value of at least 1.1, more preferably in the range of 1.2 - 3.0, even more preferably 1.2 - 2.5, most preferably 1.5 - 2.2. The reaction can be carried out at typical polymerization conditions, preferably at temperatures of 80 - 180°C, more preferably of 100 - 160°C, optionally in the presence of a catalyst. Although the first reaction product **RP1** is obtained by reacting a reaction mixture it is not required that all ingredients of the first reaction mixture are reactive, i.e. take part in the reactions.

The adhesive composition of the present invention further comprises a second reaction product **RP2,** which is obtainable by reacting a second reaction mixture comprising at least one monoisocyanate **MI** and at least one isocyanate reactive silane **SI** containing only one isocyanate reactive group selected from the group consisting of a hydroxyl group, mercapto group and amino group. The reaction can be carried out at a temperature in the range of 30 - 100°C, more preferably of 40 - 80°C, optionally in the presence of a catalyst.

The reaction product **RP2** can have an average molecular weight (Mₙ) of not more than 1,500 g/mol, preferably not more than 1,000 g/mol. Reaction products **RP2** having higher average molecular weights, for example, those having an average molecular weights (Mₙ) of more than 1,500 g/mol, are not suitable and preferably not used in the adhesive composition. It is also preferred that the reaction product **RP2** does not include any unreacted isocyanate groups.

The amount of the second reaction product **RP2** in the adhesive composition is preferably adjusted such as to obtain improved bonding on polar substrates compared to the similar adhesive composition not containing the second reaction product **RP2.** However, it has been also found out that increasing the amount of the second reaction product **RP2** above a certain limit may result in deterioration of the other application relevant properties of the adhesive composition such as green strength and tensile strength of the cured adhesive. Preferably, the second reaction product **RP2** comprises 0.1 - 1.5 wt.-%, preferably 0.25 - 1.25 wt.-%, most preferably 0.5 - 1.0 wt.-%, of the total weight of the adhesive composition.

The isocyanate reactive silane **SI** is preferably a compound of formula (I): 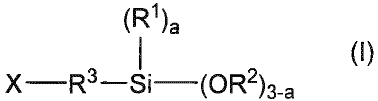 wherein
R¹ is a linear or branched C₁ - C₁₀ alkyl group,
R² is a linear or branched C₁ - C₅ alkyl group or an acyl group,
R³ is a linear, branched or cyclical C₁ - C₂₀ alkyl group, or arylalkyl group,
a is 0, 1, or 2, and
X is an isocyanate reactive group selected from the group consisting of -OH, - SH, -NH₂, and -NHR₄, wherein
R₄ is a C₁ - C₂₀ alkyl moiety or a C₆ - C₁₂ cycloalkyl or arylalkyl moiety or a substituent of the formula (II):

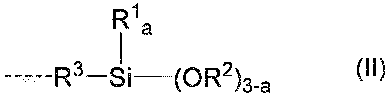

In the formula (I), R¹ is preferably a linear or branched C₁ - C₈ alkyl group, more preferably a linear or branched C₁ - C₄ alkyl group, for example methyl or ethyl.

In the formula (I), R² is preferably a linear or branched C₁ - C₅ alkyl group, more preferably a linear or branched C₁ - C₄ alkyl group, for example methylene or ethylene, or an acyl group.

In the formula (I), R³ is preferably a linear or branched C₁ - C₁₀ alkyl group, more preferably a linear or branched C₁ - C₈ alkyl group, such as methylene, ethylene, propylene, 2-methylpropylene, or 3,3-dimethylbutylene, for example, most preferably methylene or propylene.

Preferably, the at least one isocyanate reactive silane **SI** of formula (I) is a mercaptosilane, prefereably a mercaptosilane selected from the group consisting of mercaptomethyl trimethoxysilane, mercaptomethyl triethoxysilane, mercaptomethyl dimethoxymethylsilane, mercaptomethyl diethoxymethylsilane, 3-mercapto propyltrimethoxysilane, 3-mercapto propyltriethoxysilane, 3-mercapto propyltriisopropoxysilane, 3-mercapto propyldimethoxymethylsilane, 3-mercapto propyldiethoxymethylsilane, 3-mercapto-2-methylpropyltrimethoxysilane and 4-mercapto-3,3-dimethylbutyltrimethoxysilane.

According to one or more embodiments, the at least one isocyanate reactive silane **SI** is selected from the group consisting of 3-mercapto propyltrimethoxysilane, 3-mercapto propyltriethoxysilane, mercaptomethyltrimethoxysilane, mercaptomethyltriethoxysilane, and 3-mercapto propyldimethoxymethylsilane, preferably from the group consisting of 3-mercapto propyltrimethoxysilane, 3-mercapto propyltriethoxysilane, and 3-mercapto propyldimethoxymethylsilane.

The monoisocyanate **MI** is preferably selected from the group consisting of para-toluenesulfonyl isocyanate and a reaction product of 2,4-toluene diisocyanate or 2,6-toluene diisocyanate with an alcohol of the formula R⁵-OH wherein R⁵ is a linear or branched C₁ - C₁₈ alkyl group. According to one or more embodiments, the at least one monoisocyanate **MI** is a toluenesulfonyl isocyanate.

Preferably, the second reaction mixture comprises 30 - 60 wt.-%, preferably 40 - 55 wt.-%, of the at least one monoisocyanate **MI** and 30 - 60 wt.-%, preferably 40 - 55 wt.-%, of the at least one isocyanate reactive silane **SI,** all proportions being based on the total weight of the second reaction mixture. According to one or more embodiments, the second reaction mixture consists of the at least one monoisocyanate **MI** and the at least one isocyanate reactive silane **SI.**

Preferably, the first reaction product **RP1** comprises at least 50 wt.-%, more preferably at least 60 wt.-%, even more preferably at least 70 wt.-%, most preferably at least 95 wt.-%, of the total weight of the adhesive composition.

The first reaction mixture may further comprise one or more non-reactive thermoplastic polymers, such as homopolymers and copolymers of unsaturated monomers, in particular monomers selected from the group consisting of ethylene, propylene, butylene, isobutylene, isoprene, (meth)acrylates, hydroxyl-functional (meth)acrylates, glycol ether (meth)acrylates, glycol oligo (meth)acrylates, glycol polymer (meth)acrylates, vinyl esters, vinyl ethers, fumarates, maleates, styrene, alkyl styrene, butadiene, and acrylonitrile.

Preferably, the first reaction mixture further comprises at least one poly(meth)acrylate **PA.** The amount of the at least one poly(meth)acrylate **PA** in the first reaction mixture is not particularly restricted. It may be advantageous that the at least one poly(meth)acrylate **PA** is present in the first reaction mixture in an amount of 5 - 55 wt.-%, preferably 10 - 45 wt.-%, more preferably 15 - 40 wt.-%, most preferably 20 - 35 wt.-%, based on the total weight of the first reaction mixture.

The at least one poly(meth)acrylate **PA** may be a homopolymer of (meth)acrylate or a copolymer of (meth)acrylates and optionally one or more further comonomers and/or auxiliary comonomers. Suitable (meth)acrylates include, for example, C₁-C₁₂-alkyl(meth)acrylates, preferably C₁-C₄-alkyl(meth)acrylates. It may be preferred that the (meth)acrylates do not contain further functional groups such as hydroxyl- and/or carboxyl groups. However, (meth)acrylates containing further functional groups, in particular hydroxyl-groups, can be used in combination with (meth)acrylates without further functional groups.

Particularly suitable (meth)acrylates include, for example, methylacrylate, ethylacrylate, n-butylacrylate, tert-butylacrylate, iso-butylacrylate, 2-ethylhexylacrylate, laurylacrylate, methylmethacrylate, ethylmethacrylate and n-butylmethacrylate. Suitable (meth)acrylates with further functional groups include, for example, maleic acid acrylate, 2-hydroxyethylacrylate, 2-hydroxyethylmethacrylate, hydroxypropylacrylate, propylene glycol methacrylate, butanediol monoacrylate, and butanediol monomethacrylate. Examples of suitable further comonomers for polym(meth)acrylates include styrene, acrylonitrile, vinyl acetate, vinyl propionate and vinyl chloride. Examples of suitable auxiliary comonomers, which are typically used only in low amounts, include acrylic acid, methacrylic acid, itaconic acid, maleic acid, fumaric acid, crotonic acid, and amides thereof.

Suitable copolymer-based poly(meth)acrylates include, for example, copolymers obtained by radical polymerization of one or more acrylates and/or methacrylates optionally in combination with one or more hydroxyl-functional acrylates and/or hydroxyl-functional methacrylates and/or at least one further comonomer. Examples of preferred poly(meth)acrylates include copolymers of methylmethacrylate, n-butylmethacrylate, and at least one further comonomer, for example, hydroxyl-functional (meth)acrylate.

Suitable poly(meth)acrylates are commercially available, for example, under the trade name of Dynacoll® AC from Evonik, such as Dynacoll® AC 1420, Dynacoll® AC 1520, Dynacoll® AC 1631, Dynacoll® AC 1620, Dynacoll® AC 1630, Dynacoll® AC 1632, Dynacoll® AC 1750, Dynacoll® AC 1920, Dynacoll® AC 4830, and Dynacoll® AC 2740.

According to one or more embodiments, the first reaction mixture comprises 1 - 30 wt.-%, preferably 5 - 20 wt.-%, based on the total weight of the first reaction mixture, of at least one first poly(meth)acrylate **PA1** having an average molecular weight (Mₙ) of 25,000 - 80,000 g/mol, preferably 35,000 - 65,000 g/mol, and/or a softening point, measured by Ring and Ball method according to DIN EN 1238, of 120 - 170°C, preferably 140 - 160°C. Preferably, the at least one first poly(meth)acrylate **PA1** does not contain hydroxyl-groups.

According to one or more embodiments, the first reaction mixture further comprises 1 - 25 wt.-%, preferably 5 - 15 wt.-%, based on the total weight of the first reaction mixture, of at least one second poly(meth)acrylate **PA2** having an average molecular weight (Mₙ) of 100,000 - 180,000 g/mol, preferably 120,000 - 160,000 g/mol, and/or having a softening point, measured by Ring and Ball method according to DIN EN 1238, of 150 - 200°C, preferably 160 - 190°C. Preferably, the at least one second poly(meth)acrylate **PA2** does not contain hydroxyl-groups.

The first reaction mixture may further comprise 0.5 - 10 wt.-%, preferably 1 - 5 wt.-%, based on the total weight of the first reaction mixture, of at least one third poly(meth)acrylate **PA3,** which is different from the at least one polyol **PO,** and has a hydroxyl number, measured by using the method as defined in DIN53240-2 standard, of 1 - 10 mg KOH/g, preferably 1 - 5 mg KOH/g. Preferably, the at least one third poly(meth)acrylate **PA3** has an average molecular weight (Mₙ) of 25,000 - 100,000 g/mol, preferably 50,000 - 90,000 g/mol and/or a softening point, measured by Ring and Ball method according to DIN EN 1238, of 150 - 200°C, preferably 160 - 190°C.

The amount of the at least one polyol **PO** in the first reaction mixture is not particularly limited. It may be preferred that the at least one polyol **PO** is present in the first reaction mixture in an amount of at least 30 wt.-%, in particular 35 - 90 wt.-%, preferably 40 - 80 wt.-%, more preferably 45 - 75 wt.-%, most preferably 50 - 70 wt.-%, based on the total weight of the first reaction mixture.

Preferably, the at least one polyol **PO** is selected from the group consisting of polyether polyols, polyester polyols, and polycarbonate polyols. The preference given to different polyols depends on the application requirements. Preferred polyols are, for example, diols or triols or mixtures thereof. Particularly preferred are polyether diols, polyester diols, and polycarbonate diols.

Both at temperature of 25°C liquid and solid polyester polyols can be used in the first reaction mixture. Particularly suitable polyester polyols include amorphous, partially crystalline, and crystalline polyester polyols which are solid at a temperature of 25°C. These can be obtained from by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caprolactone, for example, also known as polycaprolactones.

Preferred polyester polyols include those obtained by reacting adipic acid, sebacic acid or dodecanedicarboxylic acid as dicarboxylic acid and hexanediol or neopentyl glycol as dihydric alcohol. Further examples of suitable polyester polyols include polyester polyols of oleochemical origin. Polyester polyols of this type may be prepared, for example, by complete ring opening of epoxidized triglycerides of a fat mixture comprising at least partially olefinically unsaturated fatty acids, with one or more alcohols having 1 - 12 carbon atoms, and by subsequent partial transesterification of the triglyceride derivatives to give alkyl ester polyols having 1 - 12 carbon atoms in the alkyl radical.

Particularly suitable crystalline or semicrystalline polyester polyols include adipic acid/hexanediol polyester and dodecanedicarboxylic acid/hexanediol polyesters. Suitable polycarbonate polyols are those that are obtainable by reacting, for example, the above mentioned dihydric or trihydric alcohols suitable for synthesizing the polyester polyols, with dialkyl carbonates, diaryl carbonates or phosgene. Polycarbonate diols are particularly suitable, especially amorphous polycarbonate diols. Other suitable polyols include castor oil and its derivatives or hydroxy-functional polybutadienes, which are commercially available, for example, under the trade name of Poly-bd® (from Cray Valley).

Suitable polyether polyols, also known as polyoxyalkylene polyols, are those which are polymerization products of ethylene oxide, 1,2-propylene oxide, 1,2- or 2,3-butylene oxide, tetrahydrofuran or mixtures thereof, optionally polymerized by means of a starter molecule having two or more active hydrogen atoms, such as, for example, water, ammonia or compounds having two or more OH- or NH- groups such as 1,2-ethanediol, 1,2- and 1,3-propanediol, neopentyl glycol, diethylene glycol, triethylene glycol, isomeric dipropylene glycols and tripropylene glycols, isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, and mixtures of the aforesaid compounds. Use can be made both of polyoxyalkylene polyols which have a low degree of unsaturation (measured according to ASTM D-2849-69 and expressed as milliequivalents of unsaturation per gram of polyol (meq/g)), produced for example by means of double metal cyanide complex catalysts (DMC catalysts), and of polyoxyalkylene polyols having a relatively high degree of unsaturation, produced for example by means of anionic catalysts such as NaOH, KOH or alkali metal alkoxides.

Particularly suitable polyether polyols are polyoxyalkylene diols or polyoxyalkylene triols, especially polyoxyethylene diols or polyoxyethylene triols. Especially suitable are polyoxyalkylene diols or polyoxyalkylene triols, more particularly polyoxypropylene diols and triols, having an average molecular weight in the range from 1,000 to 30,000 g/mol, and also polyoxypropylene diols and triols having an average molecular weight of 400 to 8,000 g/mol. Polyether polyols of these kinds are commercially available, for example, under the trade name of Acclaim® and Desmophene® (from Covestro).

Likewise particularly suitable are so-called "EO-endcapped" (ethylene oxide-endcapped) polyoxypropylene diols or triols. The latter are special polyoxypropylene-polyoxyethylene polyols, which are obtained, for example, by alkoxylating pure polyoxypropylene polyols with ethylene oxide after the end of the polypropoxylation process, and which therefore have primary hydroxyl groups.

According to one or more embodiments, the first reaction mixture comprises 5 - 45 wt.-%, preferably 15 - 40 wt.-%, of at least one polyether polyol **PO1** having a hydroxyl number of 40 - 60 mg KOH/g and/or 5 - 40 wt.-%, preferably 15 - 35 wt.-%, of at least one at room temperature solid crystalline polyester polyol **PO2** having a hydroxyl number of 20 - 40 mg KOH/g and/or a softening point, measured by Ring and Ball method according to DIN EN 1238, of 50 - 70°C, all proportions being based on the total weight of the first reaction mixture.

Preferably, the at least one polyisocyanate **P** is present in the first reaction mixture in an amount of 5 - 30 wt.-%, preferably 10 - 25 wt.-%, based on the total weight of the first reaction mixture. The at least one polyisocyanate **P** is preferably a polyisocyanate **PI** selected from the group consisting of monomeric di- or triisocyanates, oligomers of a monomeric diisocyanates, and derivatives of monomeric diisocyanates.

Examples of suitable monomeric di- or triisocyanates include 1,4-tetramethylene diisocyanate, 2-methylpentamethylene 1,5-diisocyanate, 1,6-hexamethylene diisocyanate (HDI), 2,2,4- and 2,4,4-trimethyl-1,6-hexamethylene diisocyanate (TMDI), 1,10-decamethylene diisocyanate, 1,12 dodecamethylene diisocyanate, lysine diisocyanate and lysine ester diisocyanate, cyclohexane 1,3- and 1,4-diisocyanate, 1-methyl-2,4- and -2,6-diisocyanatocyclohexane and any desired mixtures of these isomers (HTDI or H6TDI), 1-isocyanato-3,3,5-trimethyl-5-isocyanatomethylcyclohexane (i.e. isophorone diisocyanate or IPDI), perhydro-2,4'- and -4,4'-diphenylmethane diisocyanate (HMDI or H12MDI), 1,4-diisocyanato-2,2,6-trimethylcyclohexane (TMCDI), 1,3- and 1,4-bis-(isocyanatomethyl)cyclohexane, m- and p-xylylene diisocyanate (m- and p-XDI), m- and p-tetramethyl-1,3- and -1,4-xylylene diisocyanate (m-and p-TMXDI), bis(1-isocyanato-1-methylethyl)naphthalene, dimer and trimer fatty acid isocyanates such as 3,6-bis(9-isocyanatononyl)-4,5-di(1-heptenyl)cyclohexene (dimeryl diisocyanate), α,α,α',α',α'',α''-hexamethyl-1,3,5-mesitylene triisocyanate, 2,4- and 2,6-toluylene diisocyanate and any desired mixtures of these isomers (TDI), 4,4'-, 2,4'- and 2,2'-diphenylmethane diisocyanate and any desired mixtures of these isomers (MDI), mixtures of MDI and MDI homologs (polymeric MDI or PMDI), 1,3- and 1,4-phenylene diisocyanate, 2,3,5,6-tetramethyl-1,4-diisocyanatobenzene, naphthalene-1,5-diisocyanate (NDI), 3,3'-dimethyl-4,4'-diisocyanatobiphenyl (TODI), dianisidine diisocyanate (DADI), 1,3,5-tris(isocyanatomethyl)benzene, tris(4-isocyanatophenyl)methane and tris(4-isocyanatophenyl) thiophosphate.

Examples of suitable oligomers and derivates of monomeric diisocyanates include those of HDI, IPDI, TDI and MDI. Examples of these include, for example, HDI biurets, commercially available, for example, under the trade name of Desmodur® N 100 and N 3200 (from Covestro); Tolonate® HDB and HDB-LV (from Rhodia); and Duranate® 24A-100 (from Asahi Kasei); HDI isocyanurates, commercially available, for example, under the trade name of Desmodur® N 3300, Desmodur® N 3600, and Desmodur® N 3790 BA (from Covestro), Tolonate® HDT, HDT-LV and HDT-LV2 (from Rhodia), Duranate® TPA-100 and THA-100 (from Asahi Kasei), and Coronate® HX (from Nippon Polyurethane); HDI uretdiones, commercially available, for example, under the trade name of Desmodur® N 3400 (from Coverstro); HDI iminooxadiazinediones, commercially available, for example, under the trade name of Desmodur® XP 2410 (from Covestro); HDI allophanates, commercially available, for example, under the trade name of Desmodur® VP LS 2102 (from Covestro); IPDI isocyanurates, commercially available, for example, under the trade name of Desmodur® Z 4470 (from Covestro) and Vestanat® T1890/100 (from Evonik); TDI oligomers, commercially available, for example, under the trade name of Desmodur® IL (from Covestro); and also mixed isocyanurates based on TDI/HDI, commercially available, for example, under the trade name of Desmodur® HL (from Covestro).

Also particularly suitable are room temperature-liquid forms of MDI (known as "modified MDI"), which represent mixtures of MDI with MDI derivatives, such as MDI carbodiimides and/or MDI uretonimines or MDI urethanes, commercially available, for example, under trade name of Desmodur® CD, Desmodur® PF, Desmodur® PC (from Covestro), and also mixtures of MDI and MDI homologs

(polymeric MDI or PMDI), commercially available, for example, under trade name of Desmodur® VL, Desmodur® VL50, Desmodur® VL R10, Desmodur® VL R20, and Desmodur® VKS 20F (from Covestro); Isonate® M 309, Voranate® M 229, and Voranate® M 580 (from Dow Chemicals); and Lupranat® M 10 R (from Covestro).

In practice, the aforementioned oligomeric polyisocyanates typically constitute mixtures of substances having different degrees of oligomerization and/or chemical structures. Preferably these have an average isocyanate functionality of 2.1 to 4.0 and contain, in particular, isocyanurate, iminooxadiazinedione, uretdione, urethane, biuret, allophanate, carbodiimide, uretonimine or oxadiazinetrione groups. Preferred oligomeric polyisocyanates have a low monomeric diisocyanate content.

According to one or more embodiments, the at least one polyisocyanate **PI** is selected from the group consisting of at normal room temperature solid MDI, oligomers of HDI, IPDI and TDI, in particular isocyanurates.

According to one or more embodiments, the at least one polyisocyanate **P** is a polyurethane prepolymer **PUP.** Suitable polyurethane prepolymers **PUP** are obtainable by reacting at least one polyol with at least one polyisocyanate, the isocyanate groups being present in a stoichiometric excess relative to the hydroxyl groups. Advantageously the ratio between isocyanate and hydroxyl groups is 1.3 to 10, in particular 1.5 to 5. The polyurethane prepolymer **PUP** can be prepared by using known techniques directly from the polyisocyanates and the polyols, or by stepwise adduction processes, of the kind also known as chain extension reactions.

Suitable polyols for preparing polyurethane prepolymer **PUP** include, for example, the above mentioned polyols **PO.** Further to these polyols **PO** it is possible to use small amounts of low molecular weight dihydric or polyhydric alcohols such as for example, 1,2 ethanediol, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimeric fatty alcohols such as dimer fatty acid diols, for example, 1,1,1-trimethylolethane, 1,1,1-trimethylolpropane, glycerol, pentaerythritol, low molecular weight alkoxylation products of the aforementioned dihydric and polyhydric alcohols, and also mixtures of the aforementioned alcohols.

Suitable polyisocyanates for preparing a polyurethane prepolymer **PUP** include aliphatic, cycloaliphatic or aromatic polyisocyanates, especially diisocyanates, examples being the above mentioned polyisocyanates **PI** and mixtures of these polyisocyanates. Preference is given to monomeric diisocyanates, especially MDI, TDI, HDI and IPDI.

It may be preferable that the reaction of at least one polyol with at least one polyisocyanate is carried out at a temperature at which the polyols, polyisocyanates and the polyurethane polymer formed are liquid.
Preferably, the polyurethane prepolymer **PUP** has an average molecular weight of more than 500 g/mol, in particular in the range of 1,000 - 30,000 g/mol and an average isocyanate functionality in the range from 1.8 to 3.

It may be preferable that the at least one polyisocyanate **P** is a monomeric polyisocyanate, a mixture of at least one polyisocyanate **PI** and at least one polyurethane prepolymer **PUP,** or a mixture of at least one monomeric polyisocyanate and at least one polyurethane prepolymer **PUP.** According to one or more embodiments, the at least one polyisocyanate **P** is a monomeric polyisocyanate, or a mixture of at least one monomeric polyisocyanate and at least one polyurethane prepolymer **PUP.** In particular, mixtures comprising monomeric and/or oligomeric MDI and MDI-based polyurethane prepolymer **PUP** as well as mixtures comprising monomeric and/or oligomeric IPDI and IPDI-based polyurethane prepolymer **PUP,** may be preferred.

The adhesive composition may optionally contain additional constituents (auxiliaries) which are customary for hot-melt adhesives. The auxiliaries may be added to the first and/or second reaction mixtures and/or to the first **RP1** and/or second **RP2** reaction products or to the adhesive composition obtained by mixing the first **RP1** and second **RP2** reaction products. In general it is useful for the auxiliaries to be added at an elevated temperature, in order to obtain a homogeneous mixture, for example, at a temperature of at least 60°C, preferably at least 100°C, and more preferably at least 110°C.

Examples of suitable auxiliaries include fillers, catalysts, plasticizers, UV absorbers, UV stabilizers and heat stabilizers, antioxidants, flame retardants, optical brighteners, pigments, dyes, and dryers. The auxiliaries, if used at all, preferably comprise not more than 25 wt.-%, more preferably not more than 15 wt.-%, most preferably not more than 5 wt.-%, of the total weight of the adhesive composition.

Suitable as catalysts are those which accelerate the reaction of the isocyanate groups with moisture. Examples of suitable catalysts include metal-based catalysts such as dialkyltin complexes, particularly dibutyltin(IV) or dioctyltin(IV) carboxylates or acetoacetonates, such as dibutyltindilaurate (DBTDL), dibutyltindiacetylacetonate, dioctyltindilaurate (DOTDL), further bismuth(III) complexes such as bismuthoctoate or bismuthneodecanoate, zinc(II) complexes, such as zincoctoate or zincneodecanoate, and zirconium(IV) complexes, such as zirconiumoctoate or zirconiumneodecanoate.

Further examples of suitable catalysts include compounds containing amine groups such as, dimorpholinodialkylethers and/or dimorpholino substituted polyalkylene glycols, for example 2,2'-dimorpholinodiethyl ether and 1,4-diazabicyclo[2.2.2]-octane. Combinations of catalysts may also be used, preferred ones including combinations of one or more metal-catalysts with one or more morpholine amine compounds.

The amount of catalysts in the adhesive composition is preferably 0.005 - 2.00% by weigh, more preferably from 0.05 to 1.00% by weight, based on the total weigh of the adhesive composition.

The adhesive composition of the invention has good workability under usual application conditions, in particular at temperatures from 100 to 170°C, meaning that at application temperature the adhesive has sufficiently low viscosity to enable application to a substrate in a molten state. The adhesive composition also develops a high initial strength immediately after the application to a substrate upon cooling even before the initiation of the crosslinking reaction with atmospheric moisture. In addition, the adhesive composition cures quickly in the presence of moisture without producing an odor and without forming any bubbles during the curing process.

The adhesive composition has a viscosity at a temperature of 130°C of less than 100,000 mPa·s, preferably of less than 50,000 mPa·s, most preferably less than 30,000 mPa·s. The viscosity at temperature of 130°C can be measured using conventional viscometers at 5 revolutions per minute, for example by using a Brookfield DV-2 Thermosel viscometer with a spindle No. 27.

Another subject of the present invention is a method for producing an adhesive composition, the method comprising steps of:
I) Reacting the constituents of the first reaction mixture to obtain the first reaction product **RP1,**
II) Reacting the constituents of the second reaction mixture to obtain the second reaction product **RP2,** and
III) Mixing the first reaction product **RP1** with the second reaction product **RP2.**

The duration of step III) is preferably from 10 minutes to 1 hour and the mixing is preferably conducted under vacuum. The temperature during step III) is preferably in the range of 100 - 165°C, more preferably 120 - 155°C, most preferably 130 - 145°C.

According to one or more embodiments step I) comprises steps of:
I') Providing in a mixing apparatus the at least one polyether polyol **PO1** and the at least one polyacrylate **PA,**
II') Mixing the contents of the mixing apparatus at an elevated temperature, preferably in the range of 120 - 170°C, to obtain a homogeneously mixed mixture,
III') Adding to the mixture obtained in step II') the at least one polyester polyol **PO2**, and continuing the mixing at a lower temperature until a homogeneously mixed mixture is obtained,
IV') Adding to the mixture obtained in step III') the at least one polyisocyanate **P** and carrying out the reaction at a temperature in the range of 50 - 180°C, preferably of 80 - 150°C.

The duration of the step IV') is of dependent on the reaction temperature used, but may be, for example, from 20 minutes to 2 hours, preferably from 45 minutes to 1.5 hours.

According to one or more embodiments, step II) comprises steps of:
I") Providing in a mixing apparatus the at least one monoisocyanate **MI** and the at least one isocyanate reactive silane **SI,**
II") Carrying out the reaction under mixing at a temperature in the range of 30 - 100°C, preferably of 50 - 80°C.

The duration of step II") is depends on the reaction temperature used, but may for example be from 30 minutes to 5 hours, preferably from 1.5 hours to 4 hours. The reaction of the at least one monoisocyanate **MI** and the at least one isocyanate reactive silane **SI** may be conducted in the presence of a catalyst. Examples of suitable catalysts include titanates, organotin compounds, bismuth compounds, with organic ligands and/or complex ligands, for example, and compounds containing amino groups.

Another subject of the present invention is use of the adhesive composition of the present invention as an assembly adhesive, a laminating adhesive, or as an adhesive for the building of sandwich elements.

Still another subject of the present invention is a method for producing a composite element, the method comprising steps of:
i) Applying a melted adhesive composition of the present invention to a first surface of a first substrate to form an adhesive film,
ii) Contacting the adhesive film with a first surface of a second substrate, and
iii) Chemically curing the adhesive film with water, in particular with atmospheric moisture.

The first and second substrates are preferably sheet-like articles having first and second major surfaces defined by peripheral edges or three-dimensional shaped articles.

In the method for producing a composite element, the adhesive composition is heated to a temperature above the softening point of the adhesive composition and applied on the first surface of the first or second substrate in molten state using any conventional technique, for example, by slot die coating, roller coating, extrusion coating, calender coating, or spray coating. The adhesive composition can be applied to a surface with a coating weight of, for example, 50 - 300 g/m², preferably 65 - 150 g/m².

Especially in case the adhesive composition is applied to the surface of the first substrate as a thin film having a coating weight of, for example, less than 150 g/m², in particular less than 100 g/m², the adhesive film formed in step i) may be reactivated by heating before being contacted with the surface of the other substrate in step ii). The reactivation temperature depends on the embodiment of the adhesive composition. It may be preferable, for example, that the adhesive film is reactivated by heating to a temperature of 60 - 200°C, in particular 70 - 150°C, preferably 70 - 120°C. The heating of the adhesive film can be conducted using any conventional technique, such as heating in an oven, heating by air stream, or heating with infrared (IR)-radiation. The reactivated adhesive film is preferably contacted with the second substrate within short time after the reactivation temperature is reached, in any case within the open time of the adhesive composition.

The method for producing a composite element can comprise a further step, wherein the second substrate not containing the pre-applied film is preheated before being contacted with the adhesive film in step ii). The temperature to which the second substrate is heated depends on the composition of the substrate. In case the second substrate is composed of ABS material, it is preferably preheated to a temperature of not more than 100°C. Preferably, the second substrate is preheated to a temperature in the range of 50 - 100°C, more preferably 50 - 80°C, before being contacted with the adhesive film.

After the adhesive film has been contacted with the second substrate, the adhesive composition develops a certain initial adhesive strength by physical curing, i.e. by cooling. Depending on the application temperature and on the embodiment of the adhesive composition, in particular on the reactivity of the adhesive, the chemical curing reactions may begin during the application of the adhesive composition on the surface of the first substrate. Typically, however, major part of the chemical curing occurs after the application of adhesive, in particular, after the applied adhesive film has been contacted with the surface of the second substrate to form the composite element.

Typically, the adhesive bond has a thickness of at least 10 µm. The term "thickness of adhesive bond" refers here to the thickness of the cured adhesive film between the first and second substrates. It may be preferable that the adhesive bond has a thickness of 10 - 2500 µm, such as 50 - 1000 µm, preferably 100 - 750 µm.

As and when required, the first and/or the second substrate may be pretreated prior to the application of the adhesive composition. Such pretreatments include, in particular, physical and/or chemical cleaning and activating processes, examples being abrading, sandblasting, brushing, corona treatment, plasma treatment, flame treatment, partial etching or the like, or treatment with cleaners or solvents, or the application of an adhesion promoter, an adhesion promoter solution or a primer.

The first and second substrates can be composed of any conventional material including polymeric material, metal, painted metal, glass, wood, wood derived materials such as natural fiber polypropylene (NFPP), and fiber materials. Suitable polymeric materials include polyethylene (PE), in particular high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof. The first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

The term "fiber material" refers to a material composed of fibers. The fibers comprise or consist of organic, inorganic or synthetic material. Examples of suitable fibers include cellulose fibers, cotton fibers, protein fibers, glass fibers, and synthetic fibers made of polyester, or homopolymer or copolymer of ethylene and/or propylene, viscose, or mixtures thereof. The fibers can be short fibers or long fibers, spun, woven or unwoven fibers or filaments. The fibers can moreover be aligned or drawn fibers. Moreover, it can be advantageous to use different fibers, both in terms of geometry and composition, together. Felt and fleece can be mentioned as particularly preferable fiber materials.

The first and second substrates are preferably single- or multi-layer sheet-like elements having a total thickness in the range of 0.05 - 10.0 mm, preferably 0.1 - 5.0 mm, in particular 0.25 - 2.5 mm. In the context of the present invention, the thickness of sheet-like elements can be determined by using a measurement method as defined in DIN EN 1849-2 standard.

According to one or more embodiments, at least one of the first and second substrates, or in case the first or second substrate is composed of more than one layer, the layer constituting the first surface of the respective substrate, is composed of ABS, glass fiber reinforced plastic (GFRP), glass, or metal. Suitable metals include, for example, aluminum and steel, in particular steel.

According to one or more embodiments, both the first and second substrates are or in case the first or second substrate is composed of more than one layer, the layer constituting the first surface of the respective substrate, is composed of ABS, glass fiber reinforced plastic (GFRP), glass, or metal. Suitable metals include, for example, aluminum and steel, in particular steel.

Another subject of the present invention is a composite element comprising:
a) A first substrate,
b) A layer of adhesive composition of the present invention, and
c) A second substrate, wherein the layer of adhesive composition is arranged between the first and second substrates such that the substrates are adhesively bonded to each other with the layer of adhesive composition.

The composite element of the present invention can be used, for example, for producing interior lining components of automotive vehicles. Examples of such interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

### Examples

The followings compounds and products shown in Table 1 were used in the examples.

**Table 1**

| Desmophen 3600Z MX | Liquid polyether polyol | Covestro |
|---|---|---|
| Dynacoll® 7360 | Crystalline polyester polyol, melting point 55°C | Evonik Industries |
| Dynacoll® AC 2740 | Polyacrylate, hydroxyl number 4 mg KOH/g | Evonik Industries |
| Dynacoll® AC 1630 | Polyacrylate, softening point 150°C | Evonik Industries |
| Dynacoll® AC 1750 | Polyacrylate, softening point 190°C | Evonik Industries |
| | | |
| Tinopal OB | Fluorescent optical brightener | BASF |
| Lupranat® ME | 4,4'-diphenylmethane diisocyanate (MDI) | BASF |
| Additive TI | p-Toluenesulfonyl isocyanate | Borchers |
| Silanil® 442 | 3-mercaptopropyltrimethoxysilane, liquid | BRB International BV |

The adhesive compositions presented in Table 2 were prepared according to the procedures as presented below.

### Preparation of reaction product HA100

1 mole of mercaptosilane and 1 mole of additive TI were charged into a reactor and the resulting mixture was reacted with stirring (∼80 rpm) for three hours under vacuum (- 0.9 bar) at a temperature of 60°C. The obtained reaction product was filled in tubes and stored at room temperature in the absence of moisture.

### Preparation of the adhesive compositions Ref-1, Ex-1, Ex-2

The polyether polyol and polyacrylate components in the quantities as presented in Table 2 were charged into a tin can of a standard lab reactor equipped with a nonstick coating and a four-neck lid with ground glass joints. The mixture was kept under vacuum with stirring (∼80 rpm) at a temperature of 160°C for 1 hour to dewater the components and to obtain a homogeneously mixed mixture. After the dewatering step the mixing was stopped and the temperature of the reactor was lowered to 140°C. The reactor was subsequently opened for airing after which the polyester polyol components were charged into the reactor. After the polyester polyols were melted, the mixture was dewatered under vacuum with stirring (∼80 rpm) at a temperature of 140°C for 1 hour.

The monomeric di-isocyanate (MDI) component was then added to the reactor and the resulting mixture was reacted under stirring and vacuum for 1 hour at a temperature of 140°C. After the reaction step, the reaction product HA100 was added to the reactor and the contents were mixed under vacuum with stirring (∼80 rpm) for 20 minutes at a temperature of 140°C. The obtained adhesive composition was filled in tubes and stored at room temperature in the absence of moisture.

### Measurement methods

The adhesive compositions were characterized using the following measurement methods.

### Viscosity at 130°C

The sample adhesive composition provided in a sealed tube was preheated in an oven at a temperature of 140°C for a time period of 20 minutes. After the heating, a sample of 12.3 g of the adhesive composition was weighted and placed in a disposable sleeve to a viscometer. The viscosity was measured at temperature of 130°C at 5 revolutions per minute using a Brookfield DV-2 Thermosel viscometer with a spindle No. 27. The values obtained with 20 minutes of tempering at the measurement temperature and five minutes of measurement were recorded as representative viscosities.

### Open time

The sample adhesive composition provided in a sealed tube was first preheated in an oven to at temperature of 140°C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper strip had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and placed (with the adhesive film facing upwards) on a sheet of plywood at room temperature (23°C) and the time was recorded as the starting point of the measurement. Every 10 seconds a short strip of silicone coated paper having dimensions of 10 cm x 1 cm and formed in a roll (non-siliconized surface facing outwards) was placed on the adhesive film and then slowly removed to separate the strip from the adhesive film. The procedure was repeated until the paper strip could not be removed from the adhesive film without damaging the paper strip or the adhesive film. The time interval between the starting point of the measurement and the last sampling point was recorded as the open time (in seconds) of the adhesive composition

The values of open time presented in Table 2 have been obtained as an average of three measurements conducted with the same adhesive composition.

### Through curing time

The sample adhesive composition provided in a sealed tube was preheated in an oven to at temperature of 140°C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper had dimensions of 30 cm x 10 cm and the adhesive was applied as a film having a thickness of 500 µm and dimensions of 30 cm x 6 cm. Before applying the adhesive film, the silicone paper strip and the doctor blade were heated to a temperature of 150°C with the heating plate.

Immediately after application of the adhesive, the silicone paper strip was removed from the heating plate and stored at standard climatic conditions (23°C, 55% relative humidity). The point of time when the adhesive film was solidified was recorded as the starting point of the measurement. At defined sampling times, a sample strip having dimensions of 10 cm x 1 cm was cut from the silicone paper strip and placed on a heating plate having a temperature of 150°C. The procedure was continued until the adhesive film on the sample strip no longer melted on the heating plate. The length of time interval between the starting point of the measurement and the last sampling point was recorded as the through curing time (in hours) of the adhesive composition.

The values of curing time presented in Table 2 have been obtained as an average of 3 measurements conducted with the same hot-melt adhesive composition.

### Green strength

The adhesive composition provided in a sealed tube was preheated in an oven to at a temperature of 140°C for a time period of 20 minutes. After the heating, a sample of the molten adhesive was applied on the surface of a wood specimen (pine) having dimensions of 9 cm x 2 cm x 5 mm. The adhesive was applied as a film having dimensions of 2 cm x 2 cm and a thickness of 1 mm.

Immediately after the application of the adhesive a second wood specimen (pine) having same dimensions as the first wood specimen was positioned over the first wood specimen along the edge of the adhesive film to form a test composite element. The second wood specimen was pressed firmly against the first wood specimen to remove air from adhesive bond. A weigh of 150 g was placed on the top surface of the second wood specimen. Any adhesive squeezed out from the joint was trimmed off with a knife. The test composite elements consisting of bonded wood specimens were stored for 30 minutes at standard climatic conditions (23°C, 55% relative humidity) before measuring the tensile shear strength.

The green strength of the adhesive composition was determined by measuring the maximum tensile stress sustained by the adhesive bond of each composite element, i.e. the tensile strength of the adhesive bond. The tensile strengths were determined using a material testing apparatus (Zwick Z 020) fulfilling the requirements of the DIN 51221 standard and using a traversing speed of 10 mm/min. The measured values of tensile strength were rounded up to the next 0.1 N/mm².

The values of green strength presented in Table 2 have been obtained as an average of three measurements conducted with the same adhesive composition.

### Heat stability under static load (wood-wood)

The adhesive composition provided in a sealed tube was preheated in an oven at a temperature of 140°C for a time period of 20 minutes. After the heating, a sample of molten adhesive was applied on the surface of a wood specimen (pine) having dimensions of 9 cm x 2 cm x 5 mm and having a 1 mm copper wire on its surface as a spacer. The adhesive was applied as a film having dimensions of 2 cm x 2 cm and a thickness of 1 mm.

Immediately after the application of the adhesive a second wood specimen (pine) having same dimensions as the first wood specimen was positioned on the first wood specimen along the edge of the adhesive film to form a test composite element. The second wood specimen was pressed firmly against the first wood specimen to remove air from adhesive bond. A weigh of 150 was placed on the top surface of the second wood specimen. Any adhesive squeezed out from the joint was trimmed off with a knife. The test composite elements consisting of bonded wood specimens were then stored for 14 days at standard climatic conditions (23°C, 40-60% relative humidity).

The test composite elements were then suspended vertically from one end of the first wood specimen on a metal hook and placed in an oven. A metal weight corresponding to a static load of 1 kg was attached to the lower end of the second wood specimen of each composite element. Three composite elements at a time were placed in the oven for the heat stability measurement.

In the heat stability measurement, the oven was first heated to a temperature, which is 40°C below the anticipated adhesive bond failure temperature. The composite elements were kept at this starting temperature for 60 minutes. In case no bond failure occurred, the temperature of the oven was increased by 10°C and the measurement was continued for another 60 minutes. The temperature of the oven was increased in steps of 10°C following the procedure as described above until a bond failure occurred. The last measured temperature before the bond failure occurred was recorded as the representative heat stability temperature.

The values for heat stability presented in Table 2 have been obtained as an average of measurements conducted with three identical test composite elements prepared with the same adhesive composition.

### Tensile strength and elongation at break

The adhesive composition provided in a sealed tube was preheated in an oven to at temperature of 140°C for a time period of 20 minutes. After the heating, a sample of 40 g of the molten adhesive was applied with a doctor blade to surface of a silicone paper strip (B700 white, Laufenberg & Sohn KG) placed on a heating plate. The silicone paper had dimensions of 60 cm x 10 cm and the adhesive was applied as a film having a thickness of 500 µm and dimensions of 60 cm x 6 cm. Immediately after the application of the adhesive, the silicone paper strip was removed from the heating plate and stored at standard climatic conditions (23°C, 55% relative humidity).

In a method based on DIN 53504, five rectangular test specimens having dimensions of 2.0 cm x 8.0 cm were cut from a cured adhesive film having a thickness of 500 µm (cured for 14 days at 23°C/50% relative humidity). The test specimens were clamped into the tensile testing machine (Zwick Z 020) and pulled apart with a speed of 100 mm/min (test conditions 23°C/50% relative humidity). The tensile strength and elongation at break were determined based on the measured maximum tensile stress.

The values of tensile strength and elongation at break presented in Table 2 have been obtained as an average of five measurements conducted with the same adhesive composition.

### Roll peel strength steel-sailcloth

For the measurement of roll peel strengths, a test composite element composed of a sailcloth substrate (Sattler Nr. 50 Dessin 220) bonded to a brushed stainless steel substrate (mattfinished steel plate V2A) using the tested adhesive composition were first prepared as follows. The sailcloth substrate had dimensions of 200 mm x 50 mm and the brushed stainless steel substrate had dimensions of 200 mm x 60 mm x 2 mm. The steel substrate was cleaned with 2-propanol, dried for at least 10 minutes and stored at temperature of 60°C before being used for the preparation of the test composite elements.

The adhesive composition provided in a sealed tube was preheated in an oven at a temperature of 140°C for a time period of 20 minutes. After the heating, a sample of 20 g of the molten adhesive was applied with a doctor blade to surface of a silicone paper strip (B700 white, Laufenberg & Sohn KG) placed on a heating plate. The silicone paper had dimensions of 60 cm x 10 cm and the adhesive was applied as a film having a thickness of 100 µm and dimensions of 60 cm x 6 cm.

Immediately after the application of the adhesive, the silicone paper strip was removed from the heating plate and the adhesive film was transferred by reactivation to the surface of the sailcloth substrate. The silicone paper was then removed and the sailcloth (with the adhesive film) and the stainless steel substrates were stored 25 seconds at a temperature of 120°C in an oven. The sailcloth and the stainless steel substrates were then removed from the oven, contacted with each other and pressed together by rolling over ten times back and forth using a roller with a weight of 5 kg. The adhesive bonding area had dimensions of 10 cm x 5 cm. The prepared composite elements were stored with a 3 kg load for 1 hour and two weeks without the load at standard climatic conditions (23°C, relative humidity of 55%).

After the storing period, the roll peel strengths were measured using a Zwick/Roell Z010 material testing apparatus equipped with a roll-peeling device. The sailcloth was peeled off from the surface of the stainless steel substrate at a peeling angle of 90 ° and at a constant cross beam speed of 100 ± 0.1 mm/min. The peeling of the sailcloth was continued until a length of approximately 100 mm of the textile sheet was peeled off. The peel resistance was calculated as average peel force per unit width of the sailcloth [N/ 50 mm] during peeling over a length of approximately 80 mm. The values for roll peel strength presented in Table 2 have been obtained as average of two measurements conducted with composite elements produced with the same adhesive composition.

### Adhesion

The adhesive composition provided in a sealed tube was preheated in an oven to at temperature of 140°C for a time period of 20 minutes. The melted adhesive was then applied in a form of a bead having dimensions of 8 mm (length) x 5-10 mm (width) to a respective substrate (plate) using the nozzle of the tube. In each case, the substrate had been cleaned beforehand by wiping with a dry paper towel. The substrate coated with the bead was cured for 14 days at standard climatic conditions (23°C, relative humidity of 50%).

The adhesion was then tested as follows. A spatula having a width of 10 cm was applied on the reverse side of the substrate in the fringe area of the cured adhesive and by means of manual force one attempted to push the spatula in this fringe area. In case it was not possible to push the spatula into this fringe area, the adhesive composition was considered to have "good adhesion" on the respective substrate. In case it was possible to push the spatula in this fringe area and the adhesive ruptured or allowed itself to be removed by the fingers without much strain, the adhesive composition was considered to have "poor adhesion" on the respective substrate. If it was nonetheless possible to push the spatula into this area but the adhesive only let itself be removed with the application of substantial force, the adhesive composition was considered to have "average adhesion" on the respective substrate. The adhesion was correspondingly tested on polar and non-polar substrates including polyoxymethylene (POM), acrylonitrile butadiene styrene copolymer (ABS), polycarbonate (PC), glass fiber reinforced plastic (GFRP), pine wood, glass, soft polyvinylchloride (PVC), polypropylene (PP), polyethylene (PE), aluminum, and poly(methylmethacrylate) (PMMA).

**Table 2**

| **Composition [wt.-%]** | **Ref-1** | **Ex-1** | **Ex-2** |
|---|---|---|---|
| Desmophen 3600ZMX | 36.78 | 36.59 | 36.4 |
| Dynacoll 7360 | 21.63 | 21.52 | 21.41 |
| Dynacoll AC 2740 | 2.42 | 2.41 | 2.4 |
| Dynacoll AC 1630 | 15.15 | 15.07 | 14.99 |
| Dynacoll AC 1750 | 10.47 | 10.42 | 10.36 |
| HA100 | - | 0.5 | 1.03 |
| Tinopal PB | 0.02 | 0.02 | 0.02 |
| Lupranat ME | 13.54 | 13.47 | 13.4 |

| **Measured properties** | | | |
|---|---|---|---|
| Viscosity measured at 130°C [MPa·s] | 10900 | 17100 | 18800 |
| Open time, 500 µm [seconds] | 5.0 | 6.0 | 5.5 |
| Through curing time [hours] | 16 | 8 | 8 |
| Green strength after 30 minutes [N/mm2] | 0.19 | 0.3 | 0.27 |
| Heat stability under static load [°C] | 160 | 170 | 170 |
| Tensile strength [N/mm²] | 9 | 9.1 | 6.9 |
| Elongation at break [%] | 500 | 600 | 740 |
| Roll peel strength, steel-sail cloth [N/50 mm] | 40 | 64 | 65 |
| Failure at peel strength | Adhesive | Adhesive/material break | Adhesive |
| Adhesion on POM | - | - | - |
| Adhesion on ABS | ○+ | ++ | ++ |
| Adhesion on PC | ++ | ++ | ++ |
| Adhesion on GFRP | + | ++ | +(+) |
| Adhesion on wood | ++ | ++ | ++ |
| Adhesion on glass | ○ | ++ | ○(+) |
| Adhesion on PVC | ++ | ++ | ++ |
| Adhesion on PP | -- | -- | -- |
| Adhesion on PE | -- | -- | -- |
| Adhesion on aluminium | ○ | ○+ | ○ |
| Adhesion on PMMA | ○- | ○ | ○ |

| | | | |
|---|---|---|---|
| -- = very poor adhesion, - = poor adhesion, ○ = average adhesion, + = good adhesion, ++ = very good adhesion | | | |

## Claims

1. An adhesive composition comprising:
a) A first reaction product **RP1** obtainable by reacting a first reaction mixture comprising at least one polyol **PO** and at least one polyisocyanate **P,** wherein the ratio of isocyanate groups to hydroxyl groups in the first reaction mixture has a value of at least 1.1, preferably in the range of 1.2 - 2.5, and
b) A second reaction product **RP2** obtainable by reacting a second reaction mixture comprising at least one monoisocyanate **MI** and at least one isocyanate reactive silane **SI** containing only one isocyanate reactive group selected from the group consisting of a hydroxyl group, mercapto group and amino group.

2. The adhesive composition according to claim 1, wherein the second reaction product **RP2** comprises 0.1 - 1.5 wt.-%, preferably 0.25 - 1.25 wt.-%, most preferably 0.5 - 1.0 wt.-%, of the total weight of the adhesive composition.

3. The adhesive composition according to claim 1 or 2, wherein the isocyanate reactive silane **SI** is a compound of formula (I): 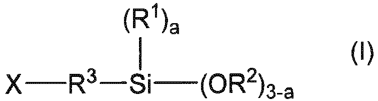 wherein
R¹ is a linear or branched C₁ to C₈ alkyl group,
R² is a linear or branched C₁ to C₅ alkyl group or an acyl group,
R³ is a linear, branched or cyclical C₁ to C₂₀ alkyl group, or arylalkyl group,
a is 0, 1, or 2, and
X is an isocyanate reactive group selected from the group consisting of -OH, -SH, -NH₂, and -NHR⁴,
wherein
R⁴ is a C₁ to C₁₂ alkyl moiety or a C₆ to C₁₂ cycloalkyl or arylalkyl moiety or a substituent of the formula (II):

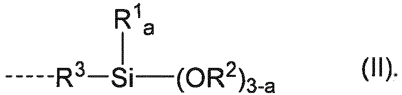

4. The adhesive composition according to any of previous claims, wherein the monofunctional isocyanate **MI** is a toluenesulfonyl isocyanate.

5. The adhesive composition according to any of previous claims, wherein the isocyanate reactive silane **SI** is selected from the group consisting of 3-mercapto propyltrimethoxysilane, 3-mercapto propyltriethoxysilane, and 3-mercapto propyldimethoxymethylsilane.

6. The adhesive composition according to any of previous claims, wherein the second reaction product **RP2** does not include any isocyanate groups.

7. The adhesive composition according to any of previous claims, wherein the first reaction product **RP1** comprises at least 50 wt.-%, preferably at least 70 wt.-%, of the total weight of the adhesive composition.

8. The adhesive composition according to any of previous claims, wherein the first reaction mixture further comprises 5 - 55 wt.-%, preferably 10 - 45 wt.-%, based on the total weight of the first reactive mixture, of at least one poly(meth)acrylate **PA.**

9. The adhesive composition according to any of previous claims, wherein the first reaction mixture further comprises 1 - 30 wt.-%, preferably 5 - 20 wt.-%, of at least one first poly(meth)acrylate **PA1** having an average molecular weight of 25,000 - 60,000 g/mol and/or a softening point, measured by Ring and Ball method according to DIN EN 1238, of 130 - 160°C and/or 1 - 25 wt.-%, preferably 5 - 15 wt.-%, of at least one second poly(meth)acrylate **PA2** having an average molecular weight of 125,000 - 150,000 g/mol and/or having a softening point, measured by Ring and Ball method according to DIN EN 1238, of 180 - 200°C, and/or 0.5 - 10 wt.-%, preferably 1 - 5 wt.-%, of at least one third poly(meth)acrylate **PA3** having a hydroxyl number of 1 - 10 mg KOH/g, preferably 1 - 5 mg KOH/g, all proportions being based on the total weight of the first reaction mixture.

10. The adhesive composition according to any of previous claims, wherein the at least one polyol **PO** is present in the first reaction mixture in an amount of 35 - 90 wt.-%, preferably 40 - 80 wt.-%, based on the total weight of the first reaction mixture.

11. The adhesive composition according to any of previous claims, wherein the first reaction mixture comprises 5 - 45 wt.-%, preferably 15 - 40 wt.-%, of at least one polyether polyol **PO1** having a hydroxyl number of 40 - 60 mg KOH/g and/or 5 - 40 wt.-%, preferably 15 - 35 wt.-%, of at least one at room temperature solid crystalline polyester polyol **PO2** having a hydroxyl number of 20 - 40 mg KOH/g and/or a softening point, measured by Ring and Ball method according to DIN EN 1238, of 50 - 70°C, all proportions being based on the total weight of the first reaction mixture.

12. The adhesive composition according to any of previous claims, wherein the at least one polyisocyanate **P** is present in the first reaction mixture in an amount of 5 - 30 wt.-%, preferably 10 - 25 wt.-%, based on the total weight of the first reaction mixture.

13. A method for producing an adhesive composition, the method comprising steps of:
I) Reacting the constituents of the first reaction mixture as defined in any of claims 1-12 to obtain the first reaction product **RP1,**
II) Reacting the constituents of the second reaction mixture as defined in any of claims 1-12 to obtain the second reaction product **RP2,**
III) Mixing the first reaction product **RP1** with the second reaction product **RP2.**

14. Use of the adhesive composition according to claims 1-12 as an assembly adhesive, laminating adhesive, or as an adhesive for the building of sandwich elements.

15. A method for producing a composite element, the method comprising steps of:
i) Applying a melted adhesive composition according to any of claims 1-12 to a first surface of a first substrate to form an adhesive film,
ii) Contacting the heated adhesive film with a first surface of a second substrate, and
iii) Chemically curing the adhesive film with water, in particular with atmospheric moisture.

16. The method according to claim 15, wherein at least one of the first and second substrates is composed of ABS, GFRP, glass, or metal.

17. A composite element comprising:
a) A first substrate,
b) A layer of adhesive composition according to any of claims 1-12, and
c) A second substrate, wherein the layer of adhesive composition is arranged between the first and second substrates such that the substrates are adhesively bonded to each other with the layer of adhesive composition.

## Patentansprüche

1. Klebstoffzusammensetzung umfassend:
a) ein erstes Reaktionsprodukt **RP1,** das durch Umsetzung einer ersten Reaktionsmischung, die mindestens ein Polyol **PO** und mindestens ein Polyisocyanat **P** umfasst, erhältlich ist, wobei das Verhältnis von Isocyanatgruppen zu Hydroxylgruppen in der ersten Reaktionsmischung einen Wert von mindestens 1,1, vorzugsweise im Bereich von 1,2-1,5, aufweist, und
b) ein zweites Reaktionsprodukt **RP2,** das durch Umsetzung einer zweiten Reaktionsmischung, die mindestens ein Monoisocyanat **MI** und mindestens ein isocyanatreaktives Silan **SI** mit nur einer isocyanatreaktiven Gruppe, die aus der Gruppe bestehend aus einer Hydroxylgruppe, einer Mercaptogruppe und einer Aminogruppe ausgewählt ist, umfasst, erhältlich ist.

2. Klebstoffzusammensetzung nach Anspruch 1, wobei das zweite Reaktionsprodukt **RP2** 0,1-1,5 Gew.-%, vorzugsweise 0,25-1,25 Gew.-%, ganz besonders bevorzugt 0,5-1,0 Gew.-%, des Gesamtgewichts der Klebstoffzusammensetzung ausmacht.

3. Klebstoffzusammensetzung nach Anspruch 1 oder 2, wobei es sich bei dem isocyanatreaktiven Silan **SI** um eine Verbindung der Formel (I) handelt: 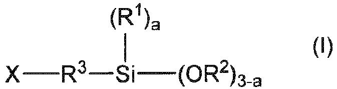 wobei
R¹ für eine lineare oder verzweigte C₁- bis C₈-Alkylgruppe steht,
R² für eine lineare oder verzweigte C₁- bis C₅-Alkylgruppe oder eine Acylgruppe steht,
R³ für eine lineare, verzweigte oder cyclische C₁- bis C₂₀-Alkylgruppe oder Arylalkylgruppe steht,
a für 0, 1 oder 2 steht und
X für eine isocyanatreaktive Gruppe steht, die aus der Gruppe bestehend aus -OH, -SH, -NH₂ und -NHR⁴ ausgewählt ist,
wobei
R⁴ für eine C₁- bis C₁₂-Alkylgruppierung oder eine C₆-bis C₁₂-Cycloalkyl- oder -Arylalkylgruppierung oder einen Substituenten der Formel (II) steht:

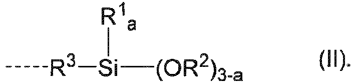

4. Klebstoffzusammensetzung nach einem der vorhergehenden Ansprüche, wobei es sich bei dem monofunktionellen Isocyanat **MI** um Toluolsulfonylisocyanat handelt.

5. Klebstoffzusammensetzung nach einem der vorhergehenden Ansprüche, wobei das isocyanatreaktive Silan **SI** aus der Gruppe bestehend aus 3-Mercaptopropyltrimethoxysilan, 3-Mercaptopropyltriethoxysilan und 3-Mercaptopropyldimethoxymethylsilan ausgewählt ist.

6. Klebstoffzusammensetzung nach einem der vorhergehenden Ansprüche, wobei das zweite Reaktionsprodukt **RP2** keine Isocyanatgruppen enthält.

7. Klebstoffzusammensetzung nach einem der vorhergehenden Ansprüche, wobei das erste Reaktionsprodukt **RP1** mindestens 50 Gew.-%, aber vorzugsweise mindestens 70 Gew.-%, des Gesamtgewichts der Klebstoffzusammensetzung ausmacht.

8. Klebstoffzusammensetzung nach einem der vorhergehenden Ansprüche, wobei die erste Reaktionsmischung ferner 5-55 Gew.-%, vorzugsweise 10-45 Gew.-%, bezogen auf das Gesamtgewicht der ersten Reaktionsmischung, mindestens eines Poly(meth)acrylats **PA** umfasst.

9. Klebstoffzusammensetzung nach einem der vorhergehenden Ansprüche, wobei die erste Reaktionsmischung ferner 1-30 Gew.-%, vorzugsweise 5-20 Gew.-%, mindestens eines ersten Poly(meth)acrylats **PA1** mit einem mittleren Molekulargewicht von 25.000-60.000 g/mol und/oder einem nach der Ring-und-Kugel-Methode gemäß DIN EN 1238 gemessenen Erweichungspunkt von 130-160 °C und/oder 1-25 Gew.-%, vorzugsweise 5-15 Gew.-%, mindestens eines zweiten Poly(meth)acrylats **PA2** mit einem mittleren Molekulargewicht von 125.000-150.000 g/mol und/oder einem nach der Ring-und-Kugel-Methode gemäß DIN EN 1238 gemessenen Erweichungspunkt von 180-200 °C und/oder 0,5-10 Gew.-%, vorzugsweise 1-5 Gew.-%, mindestens eines dritten Poly(meth)acrylats **PA3** mit einer Hydroxylzahl von 1-10 mg KOH/g, vorzugsweise 1-5 mg KOH/g, umfasst, wobei sich alle Anteile auf das Gesamtgewicht der ersten Reaktionsmischung beziehen.

10. Klebstoffzusammensetzung nach einem der vorhergehenden Ansprüche, wobei das mindestens eine Polyol **PO** in der ersten Reaktionsmischung in einer Menge von 35-90 Gew.-%, vorzugweise 40-80 Gew.-%, bezogen auf das Gesamtgewicht der ersten Reaktionsmischung, vorliegt.

11. Klebstoffzusammensetzung nach einem der vorhergehenden Ansprüche, wobei die erste Reaktionsmischung 5-45 Gew.-%, vorzugsweise 15-40 Gew.-%, mindestens eines Polyetherpolyols **PO1** mit einer Hydroxylzahl von 40-60 mg KOH/g und/oder 5-40 Gew.-%, vorzugsweise 15-35 Gew.-%, mindestens eines bei Raumtemperatur festen Polyesterpolyols **PO2** mit einer Hydroxylzahl von 20-40 mg KOH/g und/oder einem nach der Ring-und-Kugel-Methode gemäß DIN EN 1238 gemessenen Erweichungspunkt von 50-70 °C umfasst, wobei sich alle Anteile auf das Gesamtgewicht der ersten Reaktionsmischung beziehen.

12. Klebstoffzusammensetzung nach einem der vorhergehenden Ansprüche, wobei das mindestens eine Polyisocyanat **P** in der ersten Reaktionsmischung in einer Menge von 5-30 Gew.-%, vorzugsweise 10-25 Gew.-%, bezogen auf das Gesamtgewicht der ersten Reaktionsmischung, vorliegt.

13. Verfahren zur Herstellung einer Klebstoffzusammensetzung, wobei das Verfahren folgende Schritte umfasst:
I) Umsetzen der Bestandteile der ersten Reaktionsmischung gemäß einem der Ansprüche 1-12 zum Erhalt des ersten Reaktionsprodukts **RP1,**
II) Umsetzen der Bestandteile der zweiten Reaktionsmischung gemäß einem der Ansprüche 1-12 zum Erhalt des zweiten Reaktionsprodukts **RP2,**
III) Mischen des ersten Reaktionsprodukt **RP1** mit dem zweiten Reaktionsprodukt **RP2.**

14. Verwendung der Klebstoffzusammensetzung nach den Ansprüchen 1-12 als Montageklebstoff, Kaschierklebstoff oder als Klebstoff zum Aufbau von Sandwichelementen.

15. Verfahren zur Herstellung eines Verbundelements, wobei das Verfahren folgende Schritte umfasst:
i) Aufbringen einer geschmolzenen Klebstoffzusammensetzung nach einem der Ansprüche 1-12 auf eine erste Oberfläche eines ersten Substrats zur Bildung eines Klebstofffilms,
ii) Kontaktieren des Klebstofffilms mit einer ersten Oberfläche eines zweiten Substrats und
iii) chemisches Härten des Klebstofffilms mit Wasser, insbesondere mit Luftfeuchtigkeit.

16. Verfahren nach Anspruch 15, wobei das erste Substrat und/oder das zweite Substrat aus ABS, GFRP, Glas oder Metall bestehen/besteht.

17. Verbundelement, umfassend:
a) ein erstes Substrat,
b) eine Schicht aus einer Klebstoffzusammensetzung nach einem der Ansprüche 1-12 und
c) ein zweites Substrat, wobei die Schicht aus der Klebstoffzusammensetzung zwischen dem ersten Substrat und dem zweiten Substrat angeordnet ist, so dass die Substrate mit der Schicht aus der Klebstoffzusammensetzung miteinander verklebt sind.

## Revendications

1. Composition d'adhésif comprenant :
a) un premier produit de réaction RP1 qui peut être obtenu par mise en réaction d'un premier mélange de réaction comprenant au moins un polyol PO et au moins un polyisocyanate P, le rapport de groupes isocyanate sur groupes hydroxyle dans le premier mélange de réaction possédant une valeur d'au moins 1,1, préférablement dans la plage de 1,2 à 2,5, et
b) un deuxième produit de réaction RP2 qui peut être obtenu par mise en réaction d'un deuxième mélange de réaction comprenant au moins un monoisocyanate MI et au moins un silane SI, réactif envers isocyanate, contenant seulement un groupe réactif envers isocyanate choisi dans le groupe constitué par un groupe hydroxyle, un groupe mercapto et un groupe amino.

2. Composition d'adhésif selon la revendication 1, le deuxième produit de réaction RP2 représentant 0,1 à 1,5 % en poids, préférablement 0,25 à 1,25 % en poids, le plus préférablement 0,5 à 1,0 % en poids, du poids total de la composition d'adhésif.

3. Composition d'adhésif selon la revendication 1 ou 2, le silane SI réactif envers isocyanate étant un composé de formule (I) : 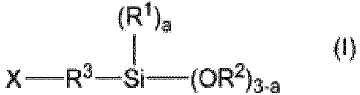 R¹ étant un groupe alkyle en C₁ à C₈ linéaire ou ramifié,
R² étant un groupe alkyle en C₁ à C₅ linéaire ou ramifié ou un groupe acyle,
R³ étant un groupe alkyle en C₁ à C₂₀ linéaire, ramifié ou cyclique, ou un groupe arylalkyle,
a étant 0, 1, ou 2, et
X étant un groupe réactif envers isocyanate choisi dans le groupe constitué par -OH, -SH, -NH₂, et -NHR⁴,
R⁴ étant un fragment alkyle en C₁ à C₁₂ ou un fragment cycloalkyle ou arylalkyle en C₆ à C₁₂ ou un substituant de la formule (II) :

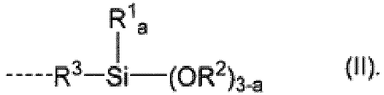

4. Composition d'adhésif selon l'une quelconque des revendications précédentes, l'isocyanate monofonctionnel MI étant un isocyanate de toluènesulfonyle.

5. Composition d'adhésif selon l'une quelconque des revendications précédentes, le silane SI réactif envers isocyanate étant choisi dans le groupe constitué par le 3-mercaptopropyltriméthoxysilane, le 3-mercaptopropyltriéthoxysilane, et le 3-mercaptopropyldiméthoxyméthylsilane.

6. Composition d'adhésif selon l'une quelconque des revendications précédentes, le deuxième produit de réaction RP2 ne comprenant aucun groupe isocyanate.

7. Composition d'adhésif selon l'une quelconque des revendications précédentes, le premier produit de réaction RP1 représentant au moins 50 % en poids, préférablement au moins 70 % en poids, du poids total de la composition d'adhésif.

8. Composition d'adhésif selon l'une quelconque des revendications précédentes, le premier mélange de réaction comprenant en outre 5 à 55 % en poids, préférablement de 10 à 45 % en poids, sur la base du poids total du premier mélange réactif, d'au moins un poly(méth)acrylate PA.

9. Composition d'adhésif selon l'une quelconque des revendications précédentes, le premier mélange de réaction comprenant en outre 1 à 30 % en poids, préférablement 5 à 20 % en poids, d'au moins un premier poly(méth)acrylate PA1 possédant un poids moléculaire moyen de 25 000 à 60 000 g/mole et/ou un point de ramollissement, mesuré par le procédé à Anneau et Bille selon la norme DIN EN 1238, de 130 à 160 °C et/ou 1 à 25 % en poids, préférablement 5 à 15 % en poids d'au moins un deuxième poly(méth)acrylate PA2 possédant un poids moléculaire moyen de 125 000 à 150 000 g/mole et/ou un point de ramollissement, mesuré par le procédé à Anneau et Bille selon la norme DIN EN 1238, de 180 à 200 °C, et/ou 0,5 à 10 % en poids, préférablement 1 à 5 % en poids, et au moins un troisième poly(méth)acrylate PA3 possédant un indice d'hydroxyle de 1 à 10 mg de KOH/g, préférablement 1 à 5 mg de KOH/g, toutes les proportions étant basées sur le poids total du premier mélange de réaction.

10. Composition d'adhésif selon l'une quelconque des revendications précédentes, l'au moins un polyol PO étant présent dans le premier mélange de réaction en une quantité de 35 à 90 % en poids, préférablement 40 à 80 % en poids, sur la base du poids total du premier mélange de réaction.

11. Composition d'adhésif selon l'une quelconque des revendications précédentes, le premier mélange de réaction comprenant 5 à 45 % en poids, préférablement 15 à 40 % en poids, d'au moins un polyéther polyol PO1 possédant un indice d'hydroxyle de 40 à 60 mg de KOH/g et/ou 5 à 40 % en poids, préférablement 15 à 35 % en poids, d'au moins un polyester polyol PO2 cristallin solide à température ambiante possédant un indice d'hydroxyle de 20 à 40 mg de KOH/g et/ou un point de ramollissement, mesuré par le procédé à Anneau et Bille selon la norme DIN EN 1238, de 50 à 70 °C, toutes les proportions étant basées sur le poids total du premier mélange de réaction.

12. Composition d'adhésif selon l'une quelconque des revendications précédentes, l'au moins un polyisocyanate P étant présent dans le premier mélange de réaction en une quantité de 5 à 30 % en poids, préférablement de 10 à 25 % en poids, sur la base du poids total du premier mélange de réaction.

13. Procédé pour la production d'une composition d'adhésif, le procédé comprenant les étapes de :
I) mise en réaction des constituants du premier mélange de réaction tel que défini dans l'une quelconque des revendications 1 à 12 pour obtenir le premier produit de réaction RP1,
II) mise en réaction des constituants du deuxième mélange de réaction tel que défini dans l'une quelconque des revendications 1 à 12 pour obtenir le deuxième produit de réaction RP2,
III) mélange du premier produit de réaction RP1 avec le deuxième produit de réaction RP2.

14. Utilisation de la composition d'adhésif selon les revendications 1 à 12 comme adhésif d'assemblage, adhésif de stratification, ou comme adhésif pour la construction d'éléments en sandwich.

15. Procédé pour la production d'un élément composite, le procédé comprenant les étapes de :
i) application d'une composition d'adhésif fondue selon l'une quelconque des revendications 1 à 12 à une première surface d'un premier substrat pour former un film d'adhésif,
ii) mise en contact du film d'adhésif chauffé avec une première surface d'un deuxième substrat, et
iii) durcissement de manière chimique du film d'adhésif avec de l'eau, en particulier avec de l'humidité atmosphérique.

16. Procédé selon la revendication 15, au moins l'un des premier et deuxième substrats étant composé d'ABS, de GFRP, de verre, ou de métal.

17. Élément composite comprenant :
a) un premier substrat,
b) une couche de composition d'adhésif selon l'une quelconque des revendications 1 à 12, et
c) un deuxième substrat, la couche de composition d'adhésif étant agencée entre les premier et deuxième substrats de telle sorte que les substrats soient liés de manière adhésive l'un à l'autre avec la couche de composition d'adhésif.
